# EUROPÄISCHE PATENTSCHRIFT

(11) **EP 2 338 587 B1**
(45) Veröffentlichungstag und Bekanntmachung des Hinweises auf die Patenterteilung: **13.01.2016**
(21) Anmeldenummer: 10014738.8
(22) Anmeldetag: 18.11.2010
(51) Int. Cl.: B01F 3/04, B05B 7/00, B05B 12/08, B23Q 11/10

(54) **Vorrichtung zur Aerosolerzeugung**
Device for creating an aerosol
Dispositif de production d'aérosol

(30) Priorität: 24.12.2009 DE 102009060454
(43) Veröffentlichungstag der Anmeldung: 29.06.2011
(73) Patentinhaber: HPM Technologie GmbH, 72525 Münsingen (DE)
(72) Erfinder: Rother, Reiner, 72574 Bad Urach (DE)
(74) Vertreter: Witte, Weller & Partner Patentanwälte mbB

(56) Entgegenhaltungen:
- EP-A1- 1 090 690
- WO-A1-98/10217
- WO-A1-02/060592
- WO-A1-2005/039783
- DE-A1- 10 139 950
- DE-A1- 10 217 927

## Beschreibung

Die Erfindung betrifft eine Vorrichtung zur Aerosolerzeugung (Aerosolerzeuger) mit einer Injektoreinheit zur Erzeugung eines Aerosols aus einer Flüssigkeit und einem Transportgas, wobei das Aerosol von der Injektoreinheit in einen Aerosolbehälter eingetragen wird, einer Flüssigkeitsleitung zum Zuleiten der Flüssigkeit in die Injektoreinheit und einer Transportgasleitung zum Zuleiten des Transportgases in die Injektoreinheit. Mittels einer vom Aerosolbehälter abgehenden Aerosolausführungsleitung ist das Aerosol aus dem Aerosolbehälter zu einem Aerosolverbraucher ausführbar. Weiter ist eine Steuereinheit, insbesondere zur Steuerung des Zuleitens des Transportgases in die Injektoreinheit vorgesehen.

Als Aerosolverbraucher sind üblicherweise mit dem Aerosol zu kühlende Werkzeuge an die Aerosolausführungsleitung angeschlossen. Das Aerosol wird dabei durch einen Kühlkanal im Werkzeug durchgeführt. Der Aerosolerzeuger bildet dabei eine so genannte Minimalmengenschmierung aus. Dabei ist die Flüssigkeit meist ein Öl, und als Transportgas wird Luft verwendet. Das Aerosol ist ein Gemisch aus dem Transportgas und darin fein verteilten Flüssigkeitströpfchen, die im Falle von Öl Durchmesser im Bereich von einem halben bis einem Mikrometer aufweisen können. Das Aerosol wird von der Injektoreinheit üblicherweise nach dem Venturidüsenprinzip erzeugt. Es wird also das Transportgas durch eine Venturidüse in den Aerosolbehälter eingeblasen, wobei die Flüssigkeit vom Transportgasstrom derart mitgenommen wird, dass sie innerhalb des Transportgases fein zerstäubt wird. Zur Aerosolerzeugung mittels der Injektoreinheit ist also ein Differenzdruck zwischen dem Druck des Transportgases und dem Druck des Aerosols im Aerosolbehälter (Aerosoldruck) notwendig vorhanden, wobei selbstverständlich der Druck des Transportgases größer als der Aerosoldruck ist.

Die Menge des aus dem Aerosolbehälter ausgeführten Aerosols hängt vom Durchmesser des Kanals des angeschlossenen Verbrauchers, beispielsweise eines Werkzeugs, und vom Druck des Aerosols im Aerosolbehälter ab. Die ausgeführte Menge des Aerosols bestimmt dabei, wie stark die Kühlung des Werkzeugs ist. Die Kühlung wird dabei durch sich auf dem Werkzeug durch Entmischen bzw. Kondensieren absetzende Flüssigkeit bewirkt. Üblicherweise wird der Druck des Aerosols im Aerosolbehälter durch die Menge des beim Aerosolerzeugen in den Aerosolbehälter eingetragenen Transportgases und durch eine vom durch die Aerosolausführungsleitung ausgeleiteten Aerosol erzeugte Druckentlastung bestimmt. Der Aerosoldruck ist also an die Aerosolerzeugung gekoppelt. Dabei wird das Transportmedium nicht nur zum Erzeugen des Aerosols verwendet, sondern auch zum Transport der darin erzeugten Flüssigkeitströpfchen zum Aerosolverbraucher durch die Aerosolausführungsleitung.

Ist der Durchmesser des Kühlkanales klein, so steht bei gegebenem Aerosoldruck nur eine geringe Menge Flüssigkeit (Kühlflüssigkeit) zum Kühlen beim Werkzeug bereit, da nur eine geringe Aerosolmenge ausgeführt wird. Es muss also, um eine ausreichende Menge von Kühlflüssigkeit bereitzustellen, der Druck erhöht werden. Gleichzeitig wird durch das Ausführen von Aerosol nur eine kleine Druckentlastung im Aerosolbehälter erreicht. Es ist also bei permanenter Aerosolerzeugung nur ein geringer Differenzdruck zwischen dem Aerosoldruck im Aerosolbehälter und dem Transportgasdruck vorhanden. Dadurch wird das Aufrechterhalten einer gleichbleibenden Aerosolqualität, d. h. einem gleichbleibenden Volumenanteil der Flüssigkeit im Aerosol, erschwert. Es wird deshalb bei bekannten Aerosolerzeugern häufig eine getaktete, d. h. periodisch unterbrochene Aerosolerzeugung durchgeführt. Letzteres führt jedoch zu Druckschwankungen und damit zu ungleichmäßiger Kühlung des angeschlossenen Werkzeugs.

Um dieses Problem zu umgehen schlagen die WO 2005/039783 und die DE 103 49 642 A1 jeweils einen Aerosolerzeuger vor, bei dem zusätzlich zur Aerosolerzeugung mittels der Injektoreinheit eine Transportgaszuleitung in den Aerosolbehälter vorgesehen ist. Die Aerosolerzeugung ist dabei also vom Transportgasstrom weitestgehend entkoppelt. Dabei wird lediglich ein geringer Teilvolumenstrom des durch die Aerosolausführungsleitung zum Werkzeug ausgeführten Aerosols von der Injektoreinheit in den Aerosolbehälter eingebracht. Der Differenzdruck zwischen dem zur Aerosolerzeugung in die Injektoreinheit zugeführten Transportgas und dem Aerosoldruck im Aerosolbehälter kann dabei über das durch die Transportgaszuleitung separat eingeführte Transportgas geregelt werden.

Auch bei diesem Aerosolerzeuger ist keine gleichbleibende Aerosolqualität gewährleistet, da die Aerosolerzeugung, z.B. durch Zu- und Abschalten mehrerer Injektoreinheiten, an Strömungsgeschwindigkeitsänderungen des Transportgasstromes durch die Transportgaszuleitung angepasst werden muss, um den Volumenanteil der Flüssigkeit im Aerosol konstant zu halten. Weiter ist der Minimaldurchmesser eines Kühlkanals des angeschlossenen Werkzeugs durch die Menge des von einem Injektor minimal zu erzeugenden Aerosols nach unten beschränkt.

Ferner kann das zur Aerosolerzeugung benötigte Transportmittel bei dem bekannten Aerosolerzeuger dem Aerosolbehälter lediglich zugeführt werden. Wird am Werkzeug weniger Aerosol abgenommen, als durch die Transportgaszuleitung in den Aerosolbehälter eingeführt wird, ist keine Aerosolerzeugung möglich.

Weiterhin ist aus der DE 101 39 950 A1 ein Aerosolerzeuger bekannt, bei dem eine Flüssigkeit durch ein Gas mittels einer Düse zu einem Aerosol verwirbelt wird. An die Gaszuführung ist ein Druckmesser angeschlossen, nach dessen Maßgabe die Einstellung einer Druckdifferenz-Fühlvorrichtung angepasst werden kann. Die Druckdifferenz-Fühlvorrichtung überwacht dabei die Druckdifferenz zwischen dem Aerosoldruck in einem Aerosolbehälter und dem zugeführten Gasdruck. Auch bei dem Aerosolerzeuger gemäß der DE 101 39 950 A1 ist eine Verringerung des Aerosoldrucks nur über ein zu kühlendes, an den Aerosolbehälter angeschlossenes Werkzeug möglich.

Die Aerosolerzeugung bekannter Aerosolerzeuger kann deshalb nur relativ träge an die durch die Aerosolausführungsleitung ausgeführte Aerosolmenge angepasst werden.

Der Erfindung liegt die Aufgabe zugrunde, eine Vorrichtung zur Aerosolerzeugung bereitzustellen, welche Nachteile des Standes der Technik vermeidet, wobei insbesondere Druckänderungen im Aerosolbehälter bei gleichbleibender Aerosolqualität schnell ausgeglichen werden können.

Diese Aufgabe wird durch den Gegenstand des Patentanspruches 1 gelöst. Die abhängigen Ansprüche stellen bevorzugte Ausführungsformen der Erfindung dar.

Eine erfindungsgemäße Vorrichtung zur Aerosolerzeugung weist eine Injektoreinheit zur Erzeugung eines Aerosols aus einer Flüssigkeit und einem Transportgas auf, wobei das Aerosol von der Injektoreinheit in einen Aerosolbehälter eingetragen wird. Ferner sind eine Flüssigkeitsleitung zum Zuleiten der Flüssigkeit in die Injektoreinheit und eine Transportgasleitung zum Zuleiten des Transportgases in die Injektoreinheit vorgesehen. Das erzeugte Aerosol kann durch mindestens eine Aerosolausführungsleitung aus dem Aerosolbehälter zu einem Aerosolverbraucher ausgeleitet werden und es ist eine Steuereinheit, insbesondere zur Steuerung des Zuleitens des Transportgases in die Injektoreinheit, vorgesehen.

Erfindungsgemäß sind eine Aerosolregelleitung zum Abführen von Aerosol aus dem Aerosolbehälter und ein Aerosoldruckregelventil vorgesehen, wobei das Aerosoldruckregelventil von der Steuereinheit derart steuerbar ist, dass durch das Abführen des Aerosols ein vorgegebener bzw. vorgebbarer Aerosolsolldruck im Aerosolbehälter einstellbar ist.

Dadurch kann ein Überdruck im Aerosolbehälter gezielt abgelassen werden, sodass immer, d. h. unabhängig vom Aerosolvolumen, das zum Aerosolverbraucher abgeführt wird, eine ausreichende Druckdifferenz zwischen dem Transportgas in der Transportgasleitung und dem Innendruck im Aerosolbehälter besteht bzw. eingestellt werden kann. Das Aerosol kann kontinuierlich mit gleichbleibender Qualität erzeugt werden. Überschüssiges Aerosol wird einfach durch die Aerosolregelleitung abgelassen. Es wird also eine zusätzliche Druckentlastung zur Druckentlastung durch einen Aerosolverbraucher bereit gestellt, der das Einstellen einer z. B. an der Steuereinheit vorgebbaren Druckdifferenz zwischen Aerosolsolldruck und dem Druck des Transportgases, d. h. einer Solldruckdifferenz, von der Steuereinheit über das Aerosoldruckregelventil ermöglicht. Falls erforderlich, kann über das Aerosoldruckregelventil aber nicht nur Aerosol aus dem Behälter abgeführt sondern auch der Druck im Behälter erhöht werden. Aerosolsolldrücke und/oder Solldruckdifferenzen und/oder Solltransportgasdrücke können z. B. als Parameterwerte in der Steuerung hinterlegt sein. Ein Anwender kann dann beispielsweise einen für ein bestimmtes, als Aerosolverbraucher angeschlossenes, Werkzeug zweckdienlichen Parametersatz auswählen. Hierzu können Empfehlungen beigefügt sein, welcher Parametersatz zu welchem Kühlkanaldurchmesser eines Werkzeugs sinnvoll ist.

Das Aerosoldruckregelventil ist als ein Drei-Wege-Ventil ausgebildet, wobei ein Ausgang des Drei-Wege-Ventils in einen Auslass mündet. Dabei ist eine Aerosolregelleitung vom Aerosoldruckregelventil in die Transportgasleitung vorgesehen. Es kann so eine Druckveränderung im Aerosolbehälter sehr schnell durch die Regelstruktur des Drei-Wege-Ventils ausgeglichen werden. Der Aerosolsolldruck im Aerosolbehälter kann so besonders schnell eingestellt, geregelt und überwacht werden. Selbstverständlich ist das Drei-Wege-Ventil dabei als Proportionalventil ausgeführt, um eine im Wesentlichen stufenlose Einstellung zu ermöglichen.

Bevorzugt weist das Aerosoldruckregelventil eine Regeleinheit mit einer Aerosoldruckmessvorrichtung auf, wobei die Regeleinheit von der Steuereinheit steuerbar ist und mittels der Aerosoldruckmessvorrichtung ein Momentandruck des Aerosols im Aerosolbehälter bestimmbar ist. Derart kann ein Regelkreis des Aerosoldrucks durch das Aerosoldruckregelventil selbst verwirklicht werden. Die Steuereinheit muss lediglich einen Aerosolsolldruck vorgeben. Messung und Regelung des Momentandrucks können selbsttätig vom Aerosoldruckregelventil vorgenommen werden. Bei einem Wechseln des Aerosolverbrauchers, kann durch eine Parameterzuordnung von der Steuereinheit augenblicklich ein gewünschter Aerosoldruck am Verbraucher bereitgestellt werden.

Besonders bevorzugt ist zusätzlich an der Transportgasleitung ein als Drei-Wege-Ventil ausgeführtes Gasdruckregelungsventil vorgesehen, wobei mittels des Gasdruckregelungsventils der Druck des der Injektoreinheit zugeleiteten Transportgases von der Steuereinheit steuerbar und auf einen voreinstellbaren Transportgassolldruck an der Injektoreinheit einstellbar ist und wobei am Gasdruckregelungsventil ein zum Ablassen von Transportgas beispielsweise in die Umgebungsluft eingerichteter Transportgasablass vorgesehen ist. Durch ein derartiges Gasdruckregelungsventil kann die Flüssigkeitskonzentration im Aerosol eingestellt werden. Dies erfolgt über ein Einstellen, Regeln und Überwachen des Venturidüsendrucks, also des Druckes des Transportgases an der Injektoreinheit. Durch den Transportgasablass kann nahezu augenblicklich die Erzeugung des Aerosols gestoppt werden, sodass bei einem Verbraucherwechsel möglichst wenig Aerosol und damit Flüssigkeit austritt.

Dabei weist das Gasdruckregelungsventil vorteilhaft eine Regeleinheit mit einer Transportgasdruckmessvorrichtung auf, wobei die Regeleinheit von der Steuereinheit steuerbar ist und mittels der Transportgasdruckmessvorrichtung ein Momentandruck des der Injektoreinheit zugeleiteten Transportgases bestimmbar ist. Dadurch können gewünschte Druckveränderungen des Transportgases in der Transportgasleitung sehr schnell durch die Mess- und Regelstruktur des Gasdruckregelungsventils realisiert werden. Es kann bei einem Verbraucherwechsel sofort die gewünschte Flüssigkeitskonzentration im Aerosol eingestellt werden.

Sehr einfach und wirkungsvoll kann das Aerosol erzeugt werden, wenn die Injektoreinheit eine Venturidüse aufweist. Die erfindungsgemäße Vorrichtung eignet sich insbesondere zur Aerosolbereitstellung, wenn mindestens zwei Aerosolausführungsleitungen zum Ausführen des Aerosols aus dem Aerosolbehälter zu jeweils einem Aerosolverbraucher vorgesehen sind. Dadurch dass der Aerosoldruck im Aerosolbehälter erfindungsgemäß sehr schnell und sicher eingestellt werden kann, können Druckschwankungen im Aerosolbehälter, die durch den abwechselnden Einsatz von mehreren Aerosolverbrauchern auftreten können, so gut ausgeglichen werden, dass keine nennenswerten gegenseitigen Beeinträchtigungen der Aerosolverbraucher auftreten.

Weiter kann der Aerosolbehälter auch die Flüssigkeit, z. B. das Öl, zur Aerosolerzeugung enthalten, sodass ein separater Flüssigkeitsbehälter und die zugehörigen Leitungen und Ventile entfallen können. Gegenüber bekannten Vorrichtungen mit separaten Flüssigkeitsbehältern lässt sich damit der konstruktive und steuerungstechnische Aufwand deutlich reduzieren.

Vorteilhaft weisen die Flüssigkeitsleitung und/oder die Transportgasleitung jeweils ein von der Steuereinheit steuerbares Absperrventil auf, sodass ein zusätzliches rasches Stoppen der Aerosolerzeugung möglich ist.

Die erfindungsgemäße Vorrichtung zur Aerosolerzeugung eignet sich besonders gut als Minimalschmierung, wenn der Aerosolverbraucher als ein Werkzeug mit einem Innenkühlkanal mit einem Durchmesser kleiner vier Millimeter ausgebildet ist, wobei das Aerosol von der Aerosolausführungsleitung durch den Innenkühlkanal ausführbar ist. Es können Werkzeuge mit Kühlkanälen mit Durchmessern kleiner einem halben Millimeter, insbesondere zwischen 0,2 und 0,5 Millimeter, mit Aerosol beschickt werden.

Die Erfindung wird nachfolgend anhand eines Ausführungsbeispiels unter Bezugnahme auf die Zeichnungen näher erläutert.

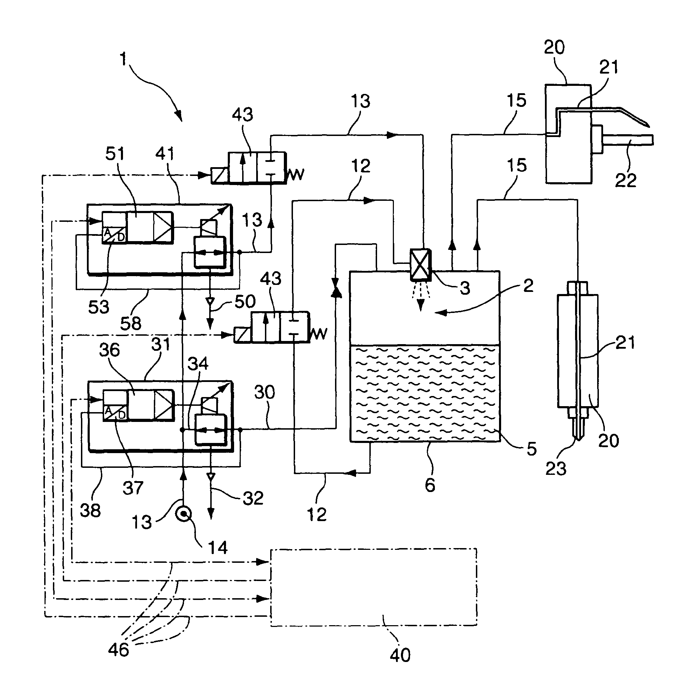

Die Figur zeigt eine erfindungsgemäße Vorrichtung zur Aerosolerzeugung in einer schematischen Darstellung.

Die Figuren der Zeichnung zeigen den erfindungsgemäßen Gegenstand stark schematisiert und sind nicht maßstäblich zu verstehen. Die einzelnen Bestandteile des erfindungsgemäßen Gegenstandes sind so dargestellt, dass ihr Aufbau gut gezeigt werden kann.

In der Figur ist eine erfindungsgemäße Vorrichtung zur Aerosolerzeugung 1 dargestellt. Das Aerosol 2 wird von einer als Venturidüse ausgebildeten Injektoreinheit 3 aus einer Flüssigkeit 5, z. B. Öl, und einem Transportgas, z. B. Luft, erzeugt und von der Injektoreinheit 3 in einen Aerosolbehälter 6 eingetragen. Das Öl wird dabei durch eine Flüssigkeitsleitung 12 in die Injektoreinheit 3 zugeführt, wobei die Flüssigkeitsleitung 12 im Bereich des Bodens des Aerosolbehälters 6 abgeht, sodass ein geschlossener Flüssigkeitskreislauf über sich im Aerosolbehälter 6 am Boden ansammelndes Öl ausgebildet ist. Das Öl muss nicht zur Injektoreinheit 3 gepumpt werden, da die Saugwirkung der Venturidüse der Injektoreinheit 3 ausreicht, um das Öl durch die Flüssigkeitsleitung 12 zur Injektoreinheit 3 zu fördern.

Weiter ist eine Transportgasleitung 13 zum Zuleiten des Transportgases, also der Luft, in die Injektoreinheit 3 vorgesehen, die von einer Druckluftversorgung 14 z. B. mit einem Luftdruck zwischen 6 und 10 bar gespeist wird. Von dem Aerosolbehälter 6 gehen zwei Aerosolausführungsleitungen 15 zum Ausführen des Aerosols 2 aus dem Aerosolbehälter 6 zu jeweils einem Aerosolverbraucher 20 ab. Die Aerosolverbraucher 20 weisen jeweils einen Kühlkanal 21 auf und sind als ein Werkzeug mit externer Aerosolzuführung, z. B. ein Bohrer 22, und als ein Werkzeug mit interner Aerosolzuführung, z. B. eine Spindel 23, ausgeführt. Die Strömungsrichtungen der Flüssigkeit bzw. des Transportmediums in den Leitungen 12, 13, 15 sind in der Figur durch Pfeilspitzen auf den Leitungen 12, 13, 15 symbolisiert dargestellt.

Weiter geht eine Aerosolregelleitung 30 zum Abführen von Aerosol 2 aus dem Aerosolbehälter 6 ab, die zu einem als Drei-Wege-Ventil ausgebildeten Aerosoldruckregelventil 31 führt. Ein Ausgang des Drei-Wege-Ventils mündet in einen Auslass 32 der Aerosolregelleitung 30 durch den das Aerosol 2 z. B. in ein nicht dargestelltes Auffangbehältnis abgeleitet werden kann. Ein weiterer Ausgang des Drei-Wege-Ventils mündet in eine Transportgasleitung 34 vom Aerosoldruckregelventil 31 in die Transportgasleitung 13. Das Aerosoldruckregelventil 31 weist eine Regeleinheit 36 mit einer Aerosoldruckmessvorrichtung 37 auf. Mittels der Aerosoldruckmessvorrichtung 37 ist ein Momentandruck des Aerosols 2 im Aerosolbehälter 6 bestimmbar. Dies ist dadurch möglich, dass die Aerosoldruckmessvorrichtung 37 über eine Druckmessleitung 38 mit der aerosolbehälterseitigen Seite der Aerosolregelleitung 30 verbunden ist, d. h. es wird durch die Druckmessleitung 38 eine direkte Verbindung zwischen dem Aerosol 2 im Aerosolbehälter 6 und der Aerosoldruckmessvorrichtung 37 ausgebildet. Die Aerosoldruckmessvorrichtung 37 ist in der Figur symbolisch durch die Buchstaben A/D für Analog-/Digitalwandlung dargestellt.

Am dargestellten Aerosolerzeuger 1 ist eine Steuereinheit 40 vorgesehen, die z. B. als ein Computer ausgebildet sein kann. Mittels dieser Steuereinheit 40 wird das Zuleiten des Transportgases in die Injektoreinheit 3 über ein weiteres Drei-Wege-Ventil, das ein Gasdruckregelungsventil 41 ausbildet, gesteuert. Die Flüssigkeitsleitung 12 und die Transportgasleitung 13 sind zusätzlich jeweils mit einem von der Steuereinheit 40 steuerbaren Absperrventil 43 ausgestattet. Auch die Regeleinheit 36 des Aerosoldruckregelventils 31 ist von der Steuereinheit 40 steuerbar. Dazu sind die beiden Drei-Wege-Ventile 31, 41 und die beiden Absperrventile 43 jeweils über eine Steuerleitung 46 mit der Steuereinheit 40 verbunden bzw. an diese angeschlossen. Der Signalstrom durch die Steuerleitungen 46 ist in der Figur durch an deren Enden eingezeichnete Pfeilspitzen symbolisiert. Das Aerosoldruckregelventil 31 ist von der Steuereinheit 40 derart steuerbar, dass insbesondere durch das Abführen des Aerosols 2 aus dem Aerosolbehälter 6, aber auch durch eine Druckerhöhung, ein voreingestellter Aerosolsolldruck im Aerosolbehälter 6 einstellbar ist. Um dies stufenlos zu ermöglichen, ist das Aerosoldruckregelventil 31 als Proportionalventil ausgeführt.

Über das an der Transportgasleitung 13 vorgesehene Gasdruckregelungsventil 41, das als ein Proportionalventil ausgeführt ist, kann der Druck des der Injektoreinheit 3 zugeleiteten Transportgases von der Steuereinheit 40 gesteuert und auf einen voreinstellbaren Transportgassolldruck an der Injektoreinheit 3 eingestellt werden. Am Gasdruckregelungsventil 41 ist ein zum Ablassen von Transportgas in die Umgebungsluft eingerichteter Transportgasablass 50 an einem Ausgang des Drei-Wege-Ventils vorgesehen. Das Gasdruckregelungsventil 41 weist eine Regeleinheit 51 mit einer Transportgasdruckmessvorrichtung 53 auf. Die Transportgasdruckmessvorrichtung 53 ist in der Figur symbolisch durch die Buchstaben A/D für Analog-/Digitalwandlung dargestellt. Die Regeleinheit 51 ist von der Steuereinheit 40 steuerbar. Mittels der Transportgasdruckmessvorrichtung 53 ist ein Momentandruck des der Injektoreinheit 3 zugeleiteten Transportgases bestimmbar. Dies wird durch eine Transportgasmessleitung 58 ermöglicht, die einenends im Bereich des injektoreinheitsseitigen Ausgangs des Gasdruckregelungsventils 41 angeschlossen ist und anderenends an der Transportgasdruckmessvorrichtung 53 angeschlossen ist.

Vorgeschlagen wird eine Vorrichtung zur Aerosolerzeugung 1 mit
- einer Injektoreinheit 3 zur Erzeugung eines Aerosols 2 aus einer Flüssigkeit 5 und einem Transportgas, wobei das Aerosol 2 von der Injektoreinheit 3 in einen Aerosolbehälter 6 eingetragen wird,
- einer Flüssigkeitsleitung 12 zum Zuleiten der Flüssigkeit 5 in die Injektoreinheit 3,
- einer Transportgasleitung 13 zum Zuleiten des Transportgases in die Injektoreinheit 3,
- einer Aerosolausführungsleitung 15 zum Ausführen des Aerosols 2 aus dem Aerosolbehälter 6 zu einem Aerosolverbraucher 20, und
- einer Steuereinheit 40 zur Steuerung des Zuleitens des Transportgases in die Injektoreinheit 3.

Dabei sind eine Aerosolregelleitung 30 zum Abführen von Aerosol 2 aus dem Aerosolbehälter 6 und ein Aerosoldruckregelventil 31 vorgesehen, wobei das Aerosoldruckregelventil 31 von der Steuereinheit 40 derart steuerbar ist, dass durch das Abführen des Aerosols 2 ein voreingestellter Aerosolsolldruck im Aerosolbehälter 6 einstellbar ist.

Die Erfindung beschränkt sich nicht auf die vorstehend angegebenen Ausführungsbeispiele. Vielmehr ist eine Anzahl von Varianten denkbar, welche auch bei grundsätzlich anders gearteter Ausführung von den Merkmalen der Erfindung Gebrauch machen.

## Patentansprüche

1. Vorrichtung zur Aerosolerzeugung (1) mit- einer Injektoreinheit (3) zur Erzeugung eines Aerosols (2) aus einer Flüssigkeit (5) und einem Transportgas, wobei das Aerosol (2) von der Injektoreinheit (3) in einen Aerosolbehälter (6) eingetragen wird,
- einer Flüssigkeitsleitung (12) zum Zuleiten der Flüssigkeit (5) in die Injektoreinheit (3),
- einer Transportgasleitung (13) zum Zuleiten des Transportgases in die Injektoreinheit (3),
- einer Aerosolausführungsleitung (15) zum Ausführen des Aerosols (2) aus dem Aerosolbehälter (6) zu einem Aerosolverbraucher (20), und
- einer Steuereinheit (40),
wobei eine Aerosolregelleitung (30) zum Abführen von Aerosol (2) aus dem Aerosolbehälter (6) und ein Aerosoldruckregelventil (31) vorgesehen sind, wobei das Aerosoldruckregelventil (31) von der Steuereinheit (40) derart steuerbar ist, dass durch das Abführen des Aerosols (2) ein vorgegebener Aerosolsolldruck im Aerosolbehälter (6) einstellbar ist, **dadurch gekennzeichnet, dass** das Aerosoldruckregelventil (31) als ein Drei-Wege-Ventil ausgebildet ist, wobei eine Transportgasleitung (34) vom Aerosoldruckregelventil (31) in die Transportgasleitung (13) vorgesehen ist und ein Ausgang des Drei-Wege-Ventils in einen Auslass (32) mündet.

2. Vorrichtung zur Aerosolerzeugung nach einem Anspruch 1, **dadurch gekennzeichnet, dass** das Aerosoldruckregelventil (31) eine Regeleinheit (36) mit einer Aerosoldruckmessvorrichtung (37) aufweist, wobei die Regeleinheit (36) von der Steuereinheit (40) steuerbar ist und mittels der Aerosoldruckmessvorrichtung (37) ein Momentandruck des Aerosols (2) im Aerosolbehälter (6) bestimmbar ist.

3. Vorrichtung zur Aerosolerzeugung nach einem der Ansprüche 1 bis 2, **dadurch gekennzeichnet, dass** an der Transportgasleitung (13) ein als Drei-Wege-Ventil ausgeführtes Gasdruckregelungsventil (41) vorgesehen ist, wobei mittels des Gasdruckregelungsventils (41) der Druck des der Injektoreinheit (3) zugeleiteten Transportgases von der Steuereinheit (40) steuerbar und auf einen voreinstellbaren Transportgassolldruck an der Injektoreinheit (3) einstellbar ist und wobei am Gasdruckregelungsventil (41) ein zum Ablassen von Transportgas in die Umgebungsluft eingerichteter Transportgasablass (50) vorgesehen ist.

4. Vorrichtung zur Aerosolerzeugung nach Anspruch 3, **dadurch gekennzeichnet, dass** das Gasdruckregelungsventil (41) eine Regeleinheit (51) mit einer Transportgasdruckmessvorrichtung (53) aufweist, wobei die Regeleinheit (51) von der Steuereinheit (40) steuerbar ist und mittels der Transportgasdruckmessvorrichtung (53) ein Momentandruck des der Injektoreinheit (3) zugeleiteten Transportgases bestimmbar ist.

5. Vorrichtung zur Aerosolerzeugung nach einem der Ansprüche 1 bis 4, **dadurch gekennzeichnet, dass** die Injektoreinheit (3) eine Venturidüse aufweist und/oder dass mindestens zwei Aerosolausführungsleitungen (15) zum Ausführen des Aerosols (2) aus dem Aerosolbehälter (6) zu jeweils einem Aerosolverbraucher (20) vorgesehen sind.

6. Vorrichtung nach einem der Ansprüche 1 bis 5, **dadurch gekennzeichnet, dass** der Aerosolbehälter (6) die Flüssigkeit (5) zur Aerosolerzeugung enthält.

7. Vorrichtung zur Aerosolerzeugung nach einem der Ansprüche 1 bis 6, **dadurch gekennzeichnet, dass** die Flüssigkeitsleitung (12) und/oder die Transportgasleitung (13) jeweils ein von der Steuereinheit (40) steuerbares Absperrventil (43) aufweisen.

8. Vorrichtung zur Aerosolerzeugung nach einem der Ansprüche 1 bis 7, **dadurch gekennzeichnet, dass** der Aerosolverbraucher (20) als ein Werkzeug mit einem Innenkühlkanal (21) mit einem Durchmesser kleiner vier Millimeter ausgebildet ist, wobei das Aerosol (2) von der Aerosolausführungsleitung (15) durch den Innenkühlkanal (21) ausführbar ist.

## Claims

1. Device (1) for creating an aerosol, having
- an injector unit (3) for creating an aerosol (2) from a liquid (5) and a transport gas, wherein the aerosol (2) is introduced by the injector unit (3) into an aerosol container (6),
- a liquid line (12) for feeding the liquid (5) into the injector unit (3),
- a transport gas line (13) for feeding the transport gas into the injector unit (3),
- an aerosol discharge line (15) for discharging the aerosol (2) out of the aerosol container (6) to an aerosol consumer (20), and
- a control unit (40),
wherein there are provided an aerosol regulating line (30) for discharging aerosol (2) out of the aerosol container (6) and an aerosol pressure regulating valve (31), wherein the aerosol pressure regulating valve (31) can be controlled by the control unit (40) such that a predefined aerosol setpoint pressure in the aerosol container (6) can be set by discharging the aerosol (2), **characterized in that** the aerosol pressure regulating valve (31) is designed as a three-way valve, wherein there is provided a transport gas line (34) from the aerosol pressure regulating valve (31) into the transport gas line (13) and an exit of the three-way valve opens into an outlet (32).

2. Device for creating an aerosol according to Claim 1, **characterized in that** the aerosol pressure regulating valve (31) has a regulating unit (36) with an aerosol pressure measuring device (37), wherein the regulating unit (36) can be controlled by the control unit (40) and an instantaneous pressure of the aerosol (2) in the aerosol container (6) can be determined by means of the aerosol pressure measuring device (37).

3. Device for creating an aerosol according to either of Claims 1 and 2, **characterized in that** a gas pressure regulating valve (41), designed as a three-way valve, is provided at the transport gas line (13), wherein, by means of the gas pressure regulating valve (41), the pressure of the transport gas fed to the injector unit (3) can be controlled by the control unit (40) and can be set, at the injector unit (3), to a transport gas setpoint pressure which can be set in advance, and wherein there is provided, at the gas pressure regulating valve (41), a transport gas discharge (50), which is set up for discharging transport gas to the ambient air.

4. Device for creating an aerosol according to Claim 3, **characterized in that** the gas pressure regulating valve (41) has a regulating unit (51) with a transport gas pressure measuring device (53), wherein the regulating unit (51) can be controlled by the control unit (40) and an instantaneous pressure of the transport gas fed to the injector unit (3) can be determined by means of the transport gas pressure measuring device (53).

5. Device for creating an aerosol according to anyone of Claims 1 to 4, **characterized in that** the injector unit (3) comprises a Venturi nozzle and/or **in that** at least two aerosol discharge lines (15) are provided for discharging the aerosol (2) from the aerosol container (6) to each one aerosol consumer (20).

6. Device according to anyone of Claims 1 to 5, **characterized in that** the aerosol container (6) contains the liquid (5) for creating the aerosol.

7. Device for creating an aerosol according to anyone of Claims 1 to 6, **characterized in that** the liquid line (12) and/or the transport gas line (13) each have a shut-off valve (43) which can be controlled by the control unit (40).

8. Device for creating an aerosol according to anyone of Claims 1 to 7, **characterized in that** the aerosol consumer (20) is in the form of a tool with an internal cooling duct (21) having a diameter of less than four millimetres, wherein the aerosol (2) can be discharged from the aerosol discharge line (15) through the internal cooling duct (21).

## Revendications

1. Dispositif de production d'aérosol (1) avec
- une unité d'injecteur (3) pour la production d'un aérosol (2) à partir d'un liquide (5) et d'un gaz transporteur, l'aérosol (2) étant chargé de l'unité d'injecteur (3) dans un récipient d'aérosol (6),
- une conduite de liquide (12) pour l'amenée du liquide (5) dans l'unité d'injecteur (3) ;
- une conduite de gaz transporteur (13) pour l'amenée du gaz transporteur dans l'unité d'injecteur (3),
- une conduite de sortie d'aérosol (15) pour la sortie de l'aérosol (2) du récipient d'aérosol (6) vers un consommateur d'aérosol (20) et
- une unité de commande (40),
une conduite de régulation d'aérosol (30) pour l'évacuation de l'aérosol (2) du récipient d'aérosol (6) et une vanne de régulation de pression d'aérosol (31) étant prévues, la vanne de régulation de pression d'aérosol (31) pouvant être commandée par l'unité de commande (40) de telle manière que par l'évacuation de l'aérosol (2), une pression de consigne d'aérosol prescrite puisse être réglée dans le récipient d'aérosol (6), **caractérisé en ce que** la vanne de régulation d'aérosol (31) est réalisée comme une vanne trois voies, une conduite de gaz transporteur (34) étant prévue de la vanne de régulation de pression d'aérosol (31) à la conduite de gaz transporteur (13) et une sortie de la vanne trois voies débouchant dans une évacuation (32).

2. Dispositif de production d'aérosol selon la revendication 1, **caractérisé en ce que** la vanne de régulation de pression d'aérosol (31) présente une unité de régulation (36) avec un dispositif de mesure de pression d'aérosol (37), l'unité de régulation (36) pouvant être commandée par l'unité de commande (40) et une pression instantanée de l'aérosol (2) pouvant être déterminée dans le récipient d'aérosol (6) à l'aide du dispositif de mesure de pression d'aérosol (37).

3. Dispositif de production d'aérosol selon l'une quelconque des revendications 1 à 2, **caractérisé en ce qu'**une vanne de régulation de pression de gaz (41) réalisée comme une vanne trois voies est prévue sur la conduite de gaz transporteur (13), la pression du gaz transporteur amené à l'unité d'injecteur (3) pouvant être commandée à l'aide de la vanne de régulation de pression de gaz (41) par l'unité de commande (40) et pouvant être réglée à une pression de consigne de gaz transporteur préréglable sur l'unité d'injecteur (3) et une sortie de gaz transporteur (50) aménagée pour la sortie du gaz transporteur dans l'air ambiant étant prévue sur la vanne de régulation de pression de gaz (41).

4. Dispositif de production d'aérosol selon la revendication 3, **caractérisé en ce que** la vanne de régulation de pression de gaz (41) présente une unité de régulation (51) avec un dispositif de mesure de pression de gaz transporteur (53), l'unité de régulation (51) pouvant être commandée par l'unité de commande (40) et une pression instantanée du gaz transporteur amené à l'unité d'injecteur (3) pouvant être déterminée à l'aide du dispositif de mesure de pression de gaz transporteur (53).

5. Dispositif de production d'aérosol selon l'une quelconque des revendications 1 à 4, **caractérisé en ce que** l'unité d'injecteur (3) présente un tube Venturi et/ou **en ce qu'**au moins deux conduites de sortie d'aérosol (15) sont prévues pour la sortie de l'aérosol (2) du récipient d'aérosol (6) à respectivement un consommateur d'aérosol (20).

6. Dispositif de production d'aérosol selon l'une quelconque des revendications 1 à 5, **caractérisé en ce que** le récipient d'aérosol (6) contient le liquide (5) pour la production d'aérosol.

7. Dispositif de production d'aérosol selon l'une quelconque des revendications 1 à 6, **caractérisé en ce que** la conduite de liquide (12) et/ou la conduite de gaz transporteur (13) présentent chacune une soupape d'arrêt (43) pouvant être commandée par l'unité de commande (40).

8. Dispositif de production d'aérosol selon l'une quelconque des revendications 1 à 7, **caractérisé en ce que** le consommateur d'aérosol (20) est réalisé comme un outil avec un canal de refroidissement intérieur (21) dont le diamètre est inférieur à quatre millimètres, l'aérosol (2) pouvant être sorti de la conduite de sortie d'aérosol (15) par le canal de refroidissement intérieur (21).
